# EUROPEAN PATENT APPLICATION

(11) **EP 2 352 091 A1**
(43) Date of publication of application: **03.08.2011**
(21) Application number: 09824679.6
(22) Date of filing: 30.09.2009
(51) Int. Cl.: G06F 9/54, G06F 9/445

(54) **INFORMATION PROCESSING DEVICE, INFORMATION PROCESSING METHOD, AND PROGRAM**

(30) Priority: 05.11.2008 JP 2008284645
(71) Applicant: Sony Corporation, Tokyo 108-0075 (JP)
(72) Inventor: DEWA, Yoshiharu, Tokyo 108-0075 (JP)
(74) Representative: Davies, Simon Robert
(86) International application number: PCT/JP2009/067099
(87) International publication number: WO 2010/052979

(57) **Abstract**

[Object] To provide an information processing apparatus, an information processing method, and a program capable of appropriately executing an application program in one program execution environment even in the case where a built-in library includes a plurality of libraries having the same library names.

[Solving Means] A JVM pre-execution processing unit 6 obtains an application program name from an application information table AIT and stores the application program name in a RAM 404 with a DTV flag. The JVM pre-execution processing unit 6 obtains an application identifier from an AMT and stores the application identifier in the RAM 404 with a BD flag. A JVM execution processing unit 12 sets a path for a BD when an attribute of a program selected by a user is the BD and sets a path for a DTV when the attribute is the DTV. The JVM execution processing unit 12 switches the path of the library file called in execution of a program in accordance with the attribute that indicates a distributer of the program selected by the user.

## Description

### Technical Field

The present invention relates to an information processing apparatus, an information processing method, and a program.

### Background Art

For digital broadcasting including an IPTV (Internet Protocol Television) or a next-generation optical disc, enhancing an interactive function with a user is being demanded. To implement the interactive function, a program for implementing the interactive function is included in a content. For example, in the case of digital broadcasting, a program for implementing the interactive function is included in a broadcasting content, and in the case of the optical disc, a program for implementing the interactive function is included in a content recorded in the optical disc.

Those program execution environments are roughly classified into two types of 1) declarative type and 2) procedure execution type. In the case of the declarative type, a program that interprets and provides a declarative type program is loaded into an apparatus. On the other hand, in the case of the procedure execution type, a procedure corresponding to a program is executed on a programming environment on a virtual machine that is an execution environment (see, for example, Patent Document 1).
Patent Document 1: Japanese Patent Translation Publication No. 2007-524297 (Fig. 3)

### Disclosure of the Invention

### Problem to be solved by the Invention

However, in this case, there is a problem of a built-in library on a program environment. The built-in library functions as a bridge between an apparatus and a program that are used to perform a procedure, and is built in the apparatus in advance. In the procedure, it is possible to call and use these library functions as if the library functions are described in the program. For example, it is possible to call a printf function of a C language in a program, although the function is not prescribed on the program. Generally, only one built-in library is set to exist in many cases. In other words, if a plurality of printf functions described above is defined on the apparatus, it is difficult for a program to judge which one should be called.

A typical program environment of the procedure execution content is a Java (registered trademark) language developed by Sun Microsystems, Inc. In the Java (registered trademark) language, a built-in library called package exists, and a Java (registered trademark).net package including a network function, a Java (registered trademark).io package for performing an input and output, and the like are widely used.

In general, package names are not overlapped, but are overlapped (conflict with each other) in some cases for some reasons. For example, in the digital broadcasting in Europe, a built-in library of MHP (Multimedia Home Platform) is used. However, a Java (registered trademark) TV function using the MHP built-in library has the same calling as a Java (registered trademark) TV function used in a BD-J built-in library in a Blu-ray (registered trademark) disc system, but operates differently therefrom. In this case, even if a virtual machine tries to call a built-in library, the virtual machine cannot judge whether which one should be called because the package names conflict with each other.

It is impossible to avoid the case where operations are different due to a difference in profile or in version of the virtual machine. However, there is a case where the operations are different on the same virtual machine due to a difference between built-in libraries. In this case, by using a classpath function that is prepared by the Java (registered trademark) language, the location of a read library is changed, thereby achieving the change of the read library. In this case, however, it is necessary to restart the virtual machine.

In view of the above-mentioned circumstances, an object of the present invention is to provide an information processing apparatus, an information processing method, and a program that are capable of appropriately executing an application program in one program execution environment even in the case where a built-in library includes a plurality of libraries having the same library name.

### Means for solving the Problem

In order to solve the above-mentioned problem, according to the present invention, there is provided an information processing apparatus that obtains, from a plurality of distributors that distributes an application program, the application program and executes the application program. The information processing apparatus includes a first storage unit, an obtaining means, a generating means, and a setting means. The first storage unit stores, in a directory structure, a plurality of library files capable of being called by the application program by a library name. The obtaining means obtains the application program and obtains table information including identification information for identifying the application program and management information for managing execution of the application program. The generating means identifies a distributor of the table information obtained, and generates second table information that indicates a relationship between the identification information of the application program obtained and a distributor of the application program. The setting means determines, when an application program to be executed is selected, a distributor corresponding to the identification information of the selected application program on a basis of the second table information, and sets a path of the library file called in execution of the selected application program in accordance with the distributor.

In the present invention, the generating means identifies the distributor of the obtained table information and generates the second table information that indicates the relationship between the identification information of the application program and the distributor of the application program. The setting means determines, when the application program to be executed is selected, the distributor corresponding to the identification information of the selected application program on the basis of the second table information, and sets the path of the library file called in execution of the selected application program in accordance with the distributor. As a result, it is possible to switch the path of the library file read by the application program in accordance with the distributor in execution of the application program. Thus, even in the case where a plurality of library files having the same library name exists, different library files can be read on the basis of the distributor, so it is possible to appropriately execute the application program in one program execution environment.

The generating means may identify the distributor of the application program on the basis of a name that is included in the table information.
Thus, it is possible to identify the distributor of the application program on the basis of the name.

The information processing apparatus may further include an executing means for executing the application program by using the library file of the path that is set by the setting means.
Thus, it is possible to use the library file of the path that is set by the setting means at the time when the application program is executed.

The obtaining means may obtain the application program and the table information through a transmission medium.
Thus, the information processing apparatus can obtain the application program and the table information through the transmission medium.

According to the present invention, there is provided an information processing method for obtaining, from a plurality of distributors that distributes an application program, the application program and executing the application program. The information processing method includes storing, in a directory structure, a plurality of library files capable of being called by the application program by a library name. The application program is obtained and table information including identification information for identifying the application program and management information for managing execution of the application program is obtained. A distributor of the table information obtained is identified, and second table information that indicates a relationship between the identification information of the application program obtained and a distributor of the application program is generated. When an application program to be executed is selected, a distributor corresponding to the identification information of the selected application program on a basis of the second table information is determined, and a path of the library file called in execution of the selected application program is set in accordance with the distributor.

According to the present invention, there is provided a program that causes a computer to obtain, from a plurality of distributors that distributes an application program, the application program and execute the application program. The program causes the computer to execute storing, in a directory structure, a plurality of library files capable of being called by the application program by a library name, obtaining the application program and obtaining table information including identification information for identifying the application program and management information for managing execution of the application, identifying a distributor of the table information obtained, and generating second table information that indicates a relationship between the identification information of the application program obtained and a distributor of the application program, and determining, when an application program to be executed is selected, a distributor corresponding to the identification information of the selected application program on a basis of the second table information, and setting a path of the library file called in execution of the selected application program in accordance with the distributor.

### Effect of the Invention

As described above, according to the present invention, it is possible to appropriately execute the application program in one program execution environment even in the case where the built-in library includes the plurality of libraries having the same library name.

### Best Modes for Carrying Out the Invention

Hereinafter, an embodiment of the present invention will be described with reference to the drawings.

### <Structure of information processing apparatus>

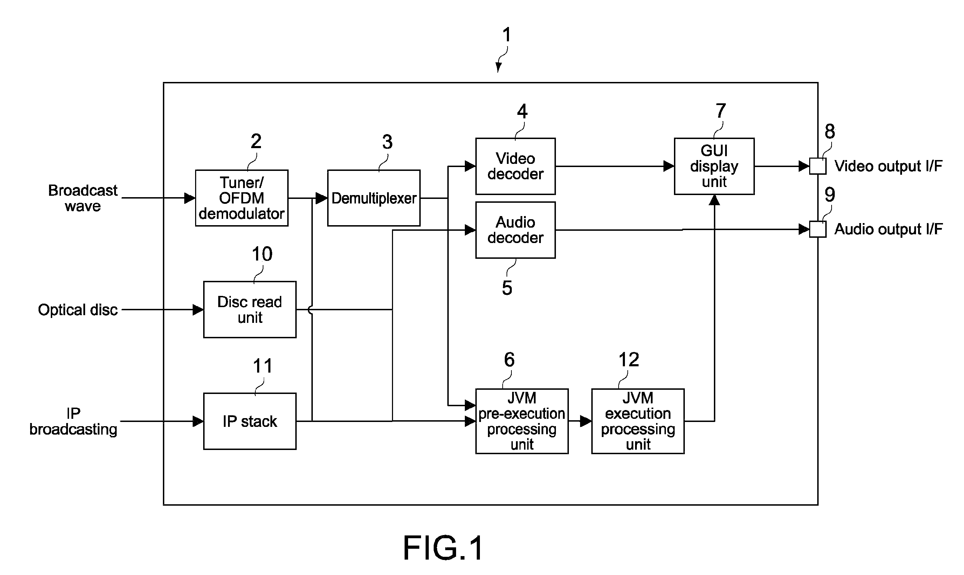

Fig. 1 is a block diagram showing the structure of an information processing apparatus according to an embodiment of the present invention.

An information processing apparatus 1 is provided with a tuner/OFDM (Orthogonal Frequency Division Multiplexing) demodulator 2, a demultiplexer 3, a video decoder 4, an audio decoder 5, a Java (registered trademark) virtual machine (JVM: Java (registered trademark) Virtual Machine) pre-execution processing unit 6, a GUI (Graphical User Interface) display unit 7, a video output interface 8, an audio output interface 9, a disc read unit 10, an IP (Internet Protocol) stack 11, and a JVM execution processing unit 12.

The tuner/OFDM demodulator 2 functions as a tuner module that receives broadcasting program data of digital TV broadcasting. In the digital TV broadcasting, as a compression coding system with respect to respective pieces of broadcasting program data (video, audio, and the like), an MPEG 2 (Moving Picture Experts Group 2) is used. The tuner/OFDM demodulator 2 receives a broadcasting signal of a specific channel from among TV broadcasting signals that are input, and takes a transport stream (TS) out of the TV broadcasting signal received. The transport stream (TS) is a stream obtained by multiplexing a plurality of pieces of broadcasting program data that has been compressed and coded. In the digital TV broadcasting, a plurality of programs is multiplexed for each channel (physical channel).

The demultiplexer 3 divides the decoded transport stream into a TS packet including video data, a TS packet including audio data, and a TS packet including a Java (registered trademark) application program and data related thereto.

The video decoder 4 decodes (decompresses) the video data. The video data decoded is subjected to processing by the GUI display unit 7, and output to an external display apparatus through the video output interface 8. The audio decoder 5 decodes (decompresses) the audio data. The audio data decoded is output from a speaker (not shown) through the audio output interface.

To/from the disc read unit 10, a Blu-ray (registered trademark) disc (optical disc) (not shown) is attachable/detachable. The disc read unit 10 reads information of the Blu-ray (registered trademark) disc loaded on the information processing apparatus 1. The disc read unit 10 outputs the video data read to the video decoder 4, outputs the audio data read to the audio decoder 5, and outputs the Java (registered trademark) application program read to the JVM pre-execution processing unit 6.

The IP stack 11 stores data of a broadcasting program that is broadcasted by the IP (Internet Protocol) broadcasting. The IP stack 11 outputs, to the demultiplexer 3, the transport stream including the video data and audio data of the broadcasting program stored. Further, in some cases, the IP stack 11 outputs the video data of the broadcasting program stored to the video decoder 4, and outputs the audio data of the broadcasting program stored to the audio decoder 5. The Java (registered trademark) application program relating to the broadcasting program stored in the IP stack 11 is directly called by the JVM pre-execution processing unit 6 in some cases.

The JVM pre-execution processing unit 6 performs preliminary processing before a JVM (Java (registered trademark) Virtual Machine) execution processing to be described later. The preliminary processing includes processing of generating a type data table to be described later and setting a path, to be described later, of the built-in library, for example.

The JVM execution processing unit 12 performs JVM execution processing, to be described later, in a JVM environment, and outputs data to the GUI display unit 7. The GUI display unit 7 obtains the data and outputs the information to a display apparatus (not shown) through the video output interface 8.

It should be noted that the data obtained from broadcast waves is entirely superimposed with the MPEG2-TS. Therefore, a transport stream decoded by the tuner/OFDM demodulator 2 is not directly given to the JVM execution environment (JVM pre-execution processing unit 6 or the like). However, data obtained by the information processing apparatus 1 via the Blu-ray (registered trademark) disc or the IP broadcasting may be a Java (registered trademark) program (Jar file) itself. Therefore, the data obtained via the Blu-ray (registered trademark) disc or the IP broadcasting may be directly called by the JVM pre-execution processing unit 6 from the disk read unit 10 or the IP stack 11 in some cases. Similarly, in the case of obtaining via the Blu-ray (registered trademark) disc or via the IP broadcasting, the video data and the audio data may be input to the video decoder 4 and the audio decoder 5, respectively, without passing through the demultiplexer 3 in some cases.

Next, a more detailed structure of the information processing apparatus 1 will be described.

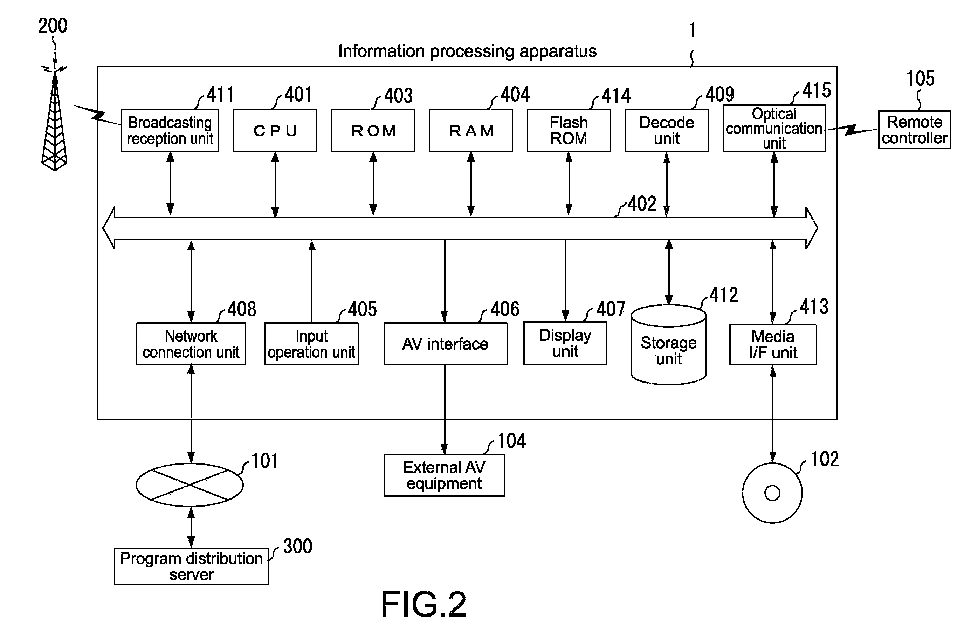

Fig. 2 is a diagram showing a more detailed structure of the hardware of the information processing apparatus 1.
As shown in the figure, to a CPU (Central Processing Unit) 401, via a system bus 402, a ROM (Read Only Memory) 403, a RAM (Random Access Memory) 404, an input operation unit 405, an AV interface 406, a display unit 407, a network connection unit 408, a decode unit 409, a broadcasting reception unit 411, a storage unit 412 formed of a hard disc drive (HDD) or the like, a media interface unit 413, a flash ROM 414, an optical communication unit 415, and the like are connected. The broadcasting reception unit 411 corresponds to the tuner/OFDM demodulator 2 shown in Fig. 1, for example.

In the ROM 403 and the flash ROM 414, programs or various pieces of data that are processed or executed by the CPU 401 are stored. The flash ROM 414 can store the various pieces of data. The RAM 404 is used as a temporary work area for the CPU 401 and an area for temporarily storing data.

The input operation unit 405 is provided with various keys and the like, and processes the input of instructions for various operations from a user. The instruction input through the input operation unit 405 is transmitted to the CPU 401 via the system bus 402.

The optical communication unit 415 is an interface for communicating with a remote controller 105. The remote controller 105 is provided with various keys like the input operation unit 405, processes the input of instructions for various operations from the user, converts the input into an optical signal, and transmits the optical signal. The optical communication unit 415 receives the optical signal transmitted from the remote controller 105, converts the optical signal into an electrical signal, and outputs the electrical signal to the CPU 401 via the system bus 402.
The display unit 407 is formed of, for example, a display such as an LCD (Liquid Crystal Display), a display control circuit that drives the display, and the like, and checks the instruction or data that is input by the user and displays various statuses or the like.

The network connection unit 408 is, for example, an interface for processing the connection with the Internet or a network 101 such as a home network connected to the Internet via a router. The network connection unit 408 corresponds to the IP stack 11 shown in Fig. 1, for example.

The AV interface 406 processes the input and output of the video signal and audio signal between the AV interface 406 and an external AV equipment 104 such as a television connected to the information processing apparatus 1.

The broadcasting reception unit 411 receives broadcast waves from a broadcast station 200 of terrestrial analog television broadcasting, terrestrial digital television broadcasting, CS digital broadcasting, BS digital broadcasting, terrestrial digital television broadcasting for a portable apparatus use, and demodulates the video signal and the audio signal.

The decode unit 409 decodes data of a program that has been compressed and coded for transmission and recording. The video data, the audio data, and the like reconstructed by being decoded by the decode unit 409 are output to the external AV equipment 104 such as a television through the AV interface 406.

The storage unit 412 is formed of an HDD, and stores the Java (registered trademark) application program, program data, an application information table, and an application management table that are obtained from the broadcast station 200, a program distribution server 300, or the Blu-ray (registered trademark) disc.

To/from the media interface unit 413, for example, a removable medium 102 such as a DVD (Digital Versatile Disc), a Blu-ray (registered trademark) disc, and a flash memory is attachable/detachable. The media interface unit 413 is an interface capable of writing and reading program data with respect to the removable medium 102 loaded. The media interface unit 413 corresponds to the disc read unit 10, for example.

### <Structure of software of information processing apparatus 1>

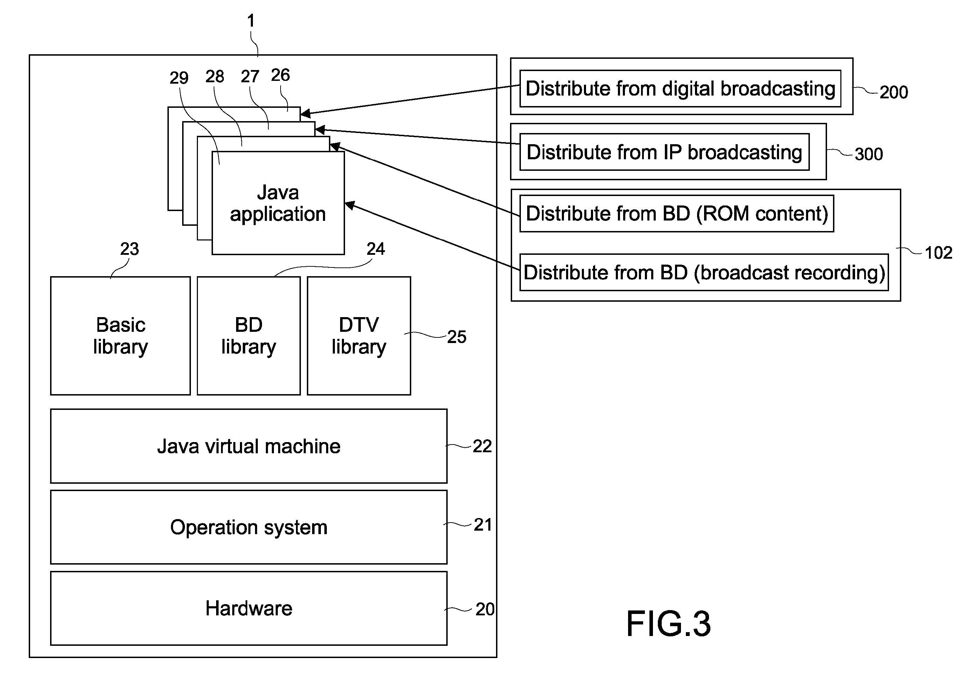

Fig. 3 is a diagram showing the structure of software of the information processing apparatus 1 shown in Fig. 1.
The information processing apparatus 1 is provided with, as the software, an operation system 21, a Java (registered trademark) VM 22, a basic library 23, a BD (Blu-ray disc) library 24, a DTV (Digital Television) library 25, and the like.

The Java (registered trademark) VM 22 is software that converts a Java (registered trademark) byte code into a native code of a platform thereof, to be executed.

The basic library 23 is obtained by making a program having a basic function to be parts so as to be used from another program and combining a plurality of program parts into one file.

The BD library 24 is called when the Java (registered trademark) application program using a BD-J (Blu-ray Disc Java (registered trademark)) is executed, for example, and obtained by combining programs having functions used at a time when the aforementioned program is executed into one file. The BD-J (Blu-ray Disc Java (registered trademark)) refers to a base for an interactive content in a Blu-ray (registered trademark) disc. A plurality of library files is stored in the storage unit 412 or the like in a directory structure.

The DTV library 25 is called when the Java (registered trademark) application program is executed, for example, and obtained by combining programs having functions at the time when the aforementioned program is executed into one file. A plurality of library files is stored in the storage unit 412 or the like in a directory structure.

The information processing apparatus 1 is capable of receiving the Java (registered trademark) application program 26 from the broadcast station 200 as one distributor through broadcast waves. The distributor in this case is a broadcaster in actuality. The broadcast station 200 is managed by the broadcaster. The information processing apparatus 1 can obtain a Java (registered trademark) application program 27 from the program distribution server 300 serving as another distributor through the IP broadcasting. The distributor in this case is a program distribution service provider in actuality. The program distribution server 300 is managed by the program distribution service provider. In addition, the information processing apparatus 1 can obtain a Java (registered trademark) application program 28 through a Blu-ray (registered trademark) disc as further another distributor. The distributor in this case is a manufacturer of the Blu-ray (registered trademark) disc in actuality. The information processing apparatus 1 can obtain a Java (registered trademark) application program 29 recorded in the Blu-ray (registered trademark) disc from the broadcast station 200 through broadcast waves.

The Java (registered trademark) application program 26 is a program that processes a GUI or the like which is necessary in viewing a digital broadcasting. The Java (registered trademark) application program 27 is a program that processes a GUI or the like which is necessary in viewing an IP broadcasting. The Java (registered trademark) application program 28 is a program that processes a GUI or the like which is necessary in viewing a ROM content such as a Blu-ray (registered trademark) disc. The Java (registered trademark) application program 29 is a program that processes a GUI or the like which is necessary in viewing a content stored in a Blu-ray (registered trademark) disc or the like.

The broadcast station 200 as one distributor distributes the Java (registered trademark) application program 26 through the broadcast waves. The program distribution server 300 as one distributor distributes the Java (registered trademark) application program 27 through the IP broadcasting. In addition to this, the broadcast station 200 and the program distribution server 300 distribute an application information table AIT (Application Information Table). The information processing apparatus 1 can obtain the application information table AIT.

### <Structure of application information table AIT>

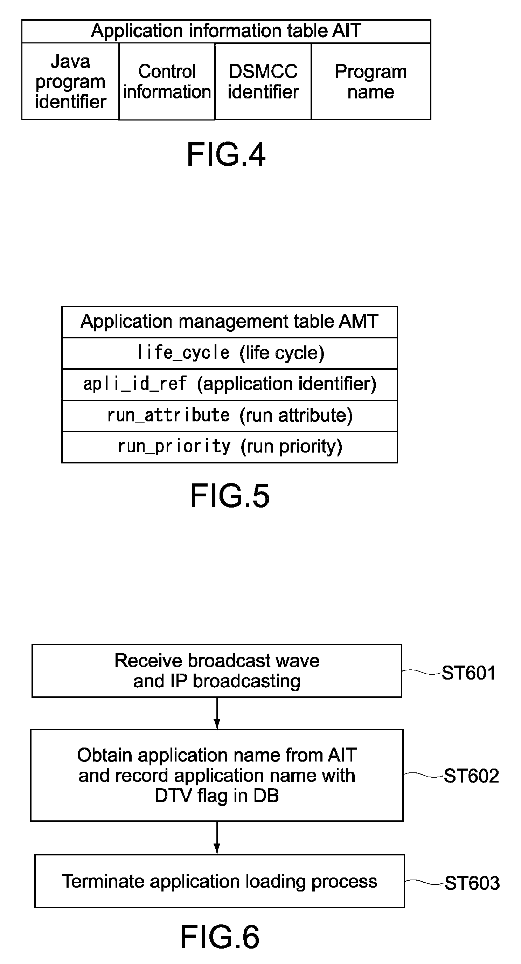

Fig. 4 is a diagram showing a data structure of the application information table AIT.

The application information table AIT (Application Information Table) is a table that indicates application information. The application information table AIT includes a Java (registered trademark) program identifier, control information, a DSMCC (Digital Storage Media Command and Control) identifier, and information of program names. The control information and the DSMCC identifier are information for managing application programs. The Java (registered trademark) program identifier and the information of the program names are identifier information for identifying the application programs.

The Java (registered trademark) program identifier is an identifier for identifying a Java (registered trademark) program. The control information is control information of the Java (registered trademark) program. The control information includes "autostart", "present", "kill", and the like. The "autostart" means that the information processing apparatus 1 instantly automatically executes this program, the "present" means that the program is not automatically executed, and the "kill" means that the program is stopped. The DSMCC identifier is an identifier for extracting a packet ID including the Java (registered trademark) program in a DSMCC system. The program name is a name of the Java (registered trademark) program. The program name is an identifier for identifying the Java (registered trademark) program. In this case, for one Java (registered trademark) program, only four pieces of information are prescribed. However, in actuality, for a larger number of Java (registered trademark) programs, much more pieces of information are defined. In detail, the DVB-MHP (Digital Video Broadcasting-Multiple Home Platform) standard should be referred to. The DVB-MHP standard is an interactive digital program standard which is widespread.

Here, the MHP (Multimedia Home Platform) is an open middleware system that is standardized for a bidirectional digital TV in a DVB (Digital Video Broadcasting) project. The MHP makes an interactive Java (registered trademark) application program to be executed by being mounted on a TV receiver. A bidirectional application program is provided on a broadcasting channel in parallel to audio and a moving image. The DVB-MHP standard prescribes the application information table (AIT: Application Information Table) in a private section in order to provide information relating to the application.

The application information table AIT has a name for identifying the table itself, and the name is adapted for both of a broadcaster and a program distribution service provider as the distributors of the application programs, and is used as identification information for distinguishing between the distributors by the information processing apparatus 1.

From the Blu-ray (registered trademark) disc as one distributor, to the information processing apparatus 1, an application management table AMT (Application Management Table) is distributed in addition to the Java (registered trademark) application program.

### <Structure of application management table AMT>

Fig. 5 is a diagram showing a data structure of the application management table AMT.

The application management table AMT includes various pieces of information such as "life-cycle (life cycle)", "apli_id_ref (application identifier)", "run attribute (run attribute)", and "run_priority (run priority)". The "life_cycle (life cycle)", the "run_attribute (run attribute)", and the "run_priority (run priority)" are management information for managing the application program. The "apli_id_ref (application identifier)" is identification information for identifying the application program. The application management table AMT has a name for identifying the table itself, and the name is adapted for the distributor (Blu-ray (registered trademark) disc manufacturer) of the application program and is used as identification information for identifying the distributor by the information processing apparatus 1.

The "life_cycle" indicates the "life cycle" of the application program. In the case where the application program is run in the Java (registered trademark) virtual machine, it is important to clearly define the "start point and end point of the service" that indicates a point of starting the service and a point of ending the service on a time axis. The "life cycle" defines the start point and end point of the service.

The "apli_id_ref" is an application identifier for identifying the application program. The application identifier indicates an application program having the life cycle by describing a reference value. The application identifier is expressed by a five-digit number of zzzzz given as a file name in a Java (registered trademark) archive file.

The "run_attribute" describes the "run attribute" of the application program in the life cycle. The run attribute have types of AutoRun, Present, Susped, and the like.

The "run_priority" describes the run priority of the application program in the life cycle. In the information processing apparatus 1, those pieces of information are used, thereby controlling the operation of the application program.

### <Operation at time when loading Java (registered trademark) application program>

Hereinafter, a description will be given on the JVM pre-execution process of the JVM pre-execution processing unit 6 of the information processing apparatus 1 shown in Fig. 1.

Fig. 6 is a diagram showing a flowchart of the operation at a time when the Java (registered trademark) application program 26 or 27 is loaded by the JVM pre-execution processing unit 6.
The tuner/OFDM demodulator 2 receives broadcast waves, or the IP stack 11 receives data of the IP broadcasting (ST601). At this time, the information processing apparatus 1 receives the application information table AIT as shown in Fig. 4 through the broadcast waves or the IP broadcasting.

The JVM pre-execution processing unit 6 determines the distributor of the Java (registered trademark) application program on the basis of the information (AIT) of the name (table name) of the application information table AIT shown in Fig. 4. In this case, the AIT is adapted for both of the broadcast station 200 and the program distribution server 300, so the distributor is determined to be the broadcast station 200 or the program distribution server 300. Next, the JVM pre-execution processing unit 6 obtains an application program name from the application information table AIT. The JVM pre-execution processing unit 6 registers the obtained application program name to the type data table stored in the storage unit 412, and registers a DTV flag as type data to the type data table with the DTV flag being associated with the application program name (ST602). In this case, the DTV flag is a flag that is generated by the JVM pre-execution processing unit 6 on the basis of the existence of the application information table AIT. The DTV flag is a flag which indicates that the Java (registered trademark) application program 26 or 27 is provided by the broadcast station 200 or the program distribution server 300. In the case where the application management table AMT exists, as described later, a BD flag is generated as type data and is registered to the type data table. After that, the JVM pre-execution processing unit 6 terminates the Java (registered trademark) application loading process (ST603). That is, the number of kinds of data registered as the type data to the type data table is two, the "DTV" and the "BD", in this embodiment. In this embodiment, the distributor of the application program is identified on the basis of the "name". However, the distributor of the application program can be also identified on the basis of organisation_id, which is included in application_idenfier() described in the AIT/AMT (see, MHP 10.5 Application Identification).

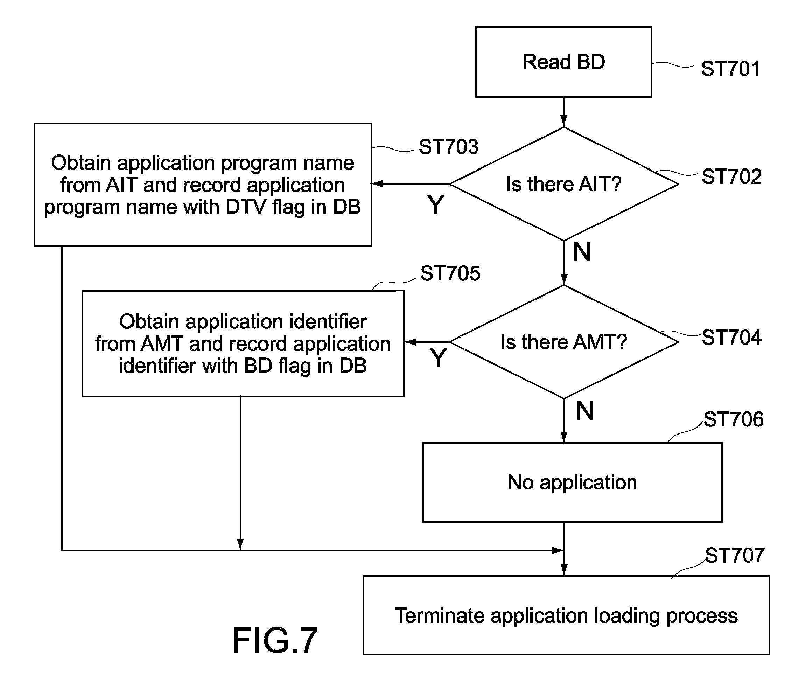

Fig. 7 is a diagram showing a flowchart of an operation at a time when the Java (registered trademark) application program 28 or 29 is loaded by the JVM pre-execution processing unit 6.
The disc read unit 10 reads the Java (registered trademark) application program 28 from the Blu-ray (registered trademark) disc (ST701). In this case, the application management table AMT is also read. Alternatively, the disc read unit 10 reads the Java (registered trademark) application program 29 recorded in the Blu-ray (registered trademark) disc through the broadcast waves or the IP broadcasting (ST701). In this case, the application information table AIT is also read.

The JVM pre-execution processing unit 6 judges whether the application information table AIT exists or not (ST702). At this time, the JVM pre-execution processing unit 6 makes the judgment by judging whether a file having the name of "AIT" exists or not, for example.

In the case where the application information table AIT exists, the JVM pre-execution processing unit 6 determines the distributor of the Java (registered trademark) application program on the basis of the name (AIT). In this case, the AIT is adapted for the broadcast station 200 and the program distribution server 300, so the distributor is determined to be the broadcast station 200 or the program distribution server 300. Next, the JVM pre-execution processing unit 6 obtains an application program name from the application information table AIT. The JVM pre-execution processing unit 6 registers the obtained application program name to the type data table, to be described later, which is stored in the storage unit 412 or the like, and registers a DTV flag to the type data table with the DTV flag being associated with the application program name (ST703). After that, the JVM pre-execution processing unit 6 terminates the application program loading process (ST707).

On the other hand, in the case where the application information table AIT does not exist, the JVM pre-execution processing unit 6 judges whether the application management table AMT exists or not (ST704). At this time, the JVM pre-execution processing unit 6 makes the judgment by judging whether a file having the name of "AMT" exists or not.

In the case where the application management table AMT exists, the JVM pre-execution processing unit 6 determines the distributor of the Java (registered trademark) application program on the basis of the name (AMT). In this case, the AMT is adapted for the Blu-ray (registered trademark) disc, so the distributor is determined to be the Blu-ray (registered trademark) disc. Next, the JVM pre-execution processing unit 6 obtains an application identifier from the application management table AMT. The JVM pre-execution processing unit 6 registers the obtained application identifier to the type data table to be described later, which is stored in the storage unit 412, for example, and registers a BD flag to the type data table with the BD flag being associated with the application identifier (ST705). After that, the JVM pre-execution processing unit 6 terminates the application program loading process (ST707).

In the case where the application management table AMT does not exist, the JVM pre-execution processing unit 6 determines that the application program does not exist (ST706), and terminates the application program process (ST707).

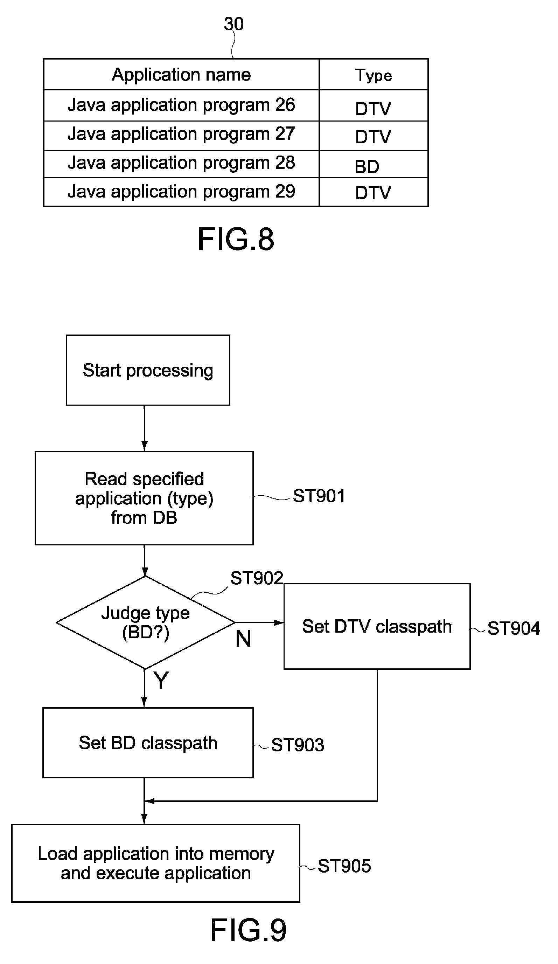

Fig. 8 is a diagram showing a data structure of a type data table 30 generated by the process shown in Figs. 6 and 7.

The type data table 30 is a table that stores an application program name as identification information for identifying an application program and a type that indicates a distributor with the application program name being associated with the type. That is, in the example of Fig. 8, the application programs 26, 27, and 29 that indicate the application program names are associated with type data of "DTV", and the application program 28 that indicates the application program name is associated with type data of "BD".

Fig. 9 is a diagram showing a flowchart of the Java (registered trademark) application program execution process executed by the JVM execution processing unit 12.

When a user or the like selects an application to be executed, the JVM execution processing unit 12 determines the Java (registered trademark) application program name selected. Then, the JVM execution processing unit 12 reads corresponding type data from the type data table 30 with the application program name being used as a key (ST901).

The JVM execution processing unit 12 sets a path of a library that should be built in the Java (registered trademark) application program on the basis of the read type data.

That is, the JVM execution processing unit 12 sets a path (classpath) for the BD in the case where the type of the Java (registered trademark) application program is the "BD" (ST903) and sets a path (classpath) for the DTV in the case where the type is the "DTV" (ST904).

More specifically, the setting of the path is performed as follows, for example.

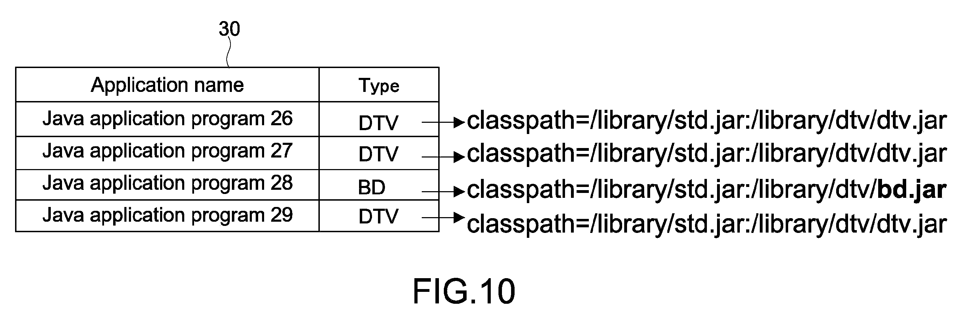

Fig. 10 is a diagram showing the relationship between the type and the classpath. In this case, a user-defined class loader is built in the JVM execution processing unit 12. For the class loader, the relationship between the type data and the path of the built-in library is defined in advance. That is, as shown in Fig. 10, for the "DTV" type data, "/library/std.jar:/library/dtv/dtv.jar" is defined as the path, and for the "BD" type data, "/library/std.jar:/library/dtv.bd.jar" is defined as the path.

Thus, in the case where the type of the Java (registered trademark) application program is the "BD", the JVM execution processing unit 12 sets the path of t h e library to b e built in to "/library/std.jar:/library/dtv.bd.jar" by the class loader (ST903). In a typical Java (registered trademark) environment, the system in which the path of the built-in library is dynamically switched as described above does not exist. However, in this embodiment, the function for dynamically switching the path of the built-in library is given to the JVM execution processing unit 12 in this embodiment.

On the other hand, in the case where the type of the Java (registered trademark) application program is the "DTV", the JVM execution processing unit 12 sets the path of the library to be built in to "/library/std.jar:/library/dtv/dtv.jar" by the class loader (ST904).

Subsequently, as shown in Fig. 9, the JVM execution processing unit 12 loads the Java (registered trademark) application program into the RAM 404 and executes the application program (ST905).

For example, the Java (registered trademark) application program 28 that is used when a ROM content such as the Blu-ray (registered trademark) disc is viewed calls library files of "std.jar" and "dtv/bd.jar" in accordance with the content of setting of the path by the JVM execution processing unit 12. Further, the Java (registered trademark) application programs 26, 27, and 29 that are used when the broadcast waves or IP broadcasting is viewed or recorded call library files of "std.jar" and "dtv/dtv.jar" in accordance with the content of setting of the path by the JVM execution processing unit 12.

The JVM execution processing unit 12 can switch the path of the library file to be read depending on the type data indicating the distributor, when executing the Java (registered trademark) application program selected by the user. Therefore, even if a plurality of library files having the same library name exist, it is possible to distinguish and read the respective built-in libraries, so the applications can be achieved appropriately in the same virtual machine execution environment.

By selecting the built-in libraries having the same library name as described above, a plurality of services can be executed in parallel in the same virtual machine execution environment. Thus, it is possible to achieve mutual communication between programs which involve the plurality of services (generally, the mutual communication cannot be performed between different virtual machine execution environments).

Further, in this embodiment, it is possible to avoid activating a virtual machine for executing the Java (registered trademark) application program received by the digital broadcasting and a virtual machine for executing the Java (registered trademark) application program read from the Blu-ray (registered trademark) disc. Therefore, the necessary memory space for the information processing apparatus 1 can be reduced.

In this embodiment, the built-in library can be optimized, so it is possible to increase memory efficiency at the time of execution.

In this embodiment, the relationship between the built-in library and the Java (registered trademark) application program is uniquely defined. Thus, it is possible to avoid reactivating the JVM along with an erroneous call. Because the reactivation of the virtual machine environment is unnecessary, high-speed activation of the interactive function can be achieved.

It should be noted that the present invention is not limited to the above embodiment and can be variously modified within the technical idea of the present invention.

In the above embodiment, given is the example in which the library name read by the application program distributed by the digital broadcasting and the IP broadcasting is the same as the library name read by the application program provided by the Blu-ray (registered trademark) disc. However, the present invention is not limited to this, and is of course applicable to the case where three or more built-in libraries read at the time of executing the application program conflict with each other, for example.

In the above embodiment, in the case of the Java (registered trademark) application 26, 27, or 29 (type is DTV) , as shown in Fig. 10, the path is set to two of "/library/std.jar:/library/dtv/dtv.jar". Further, in the case of the Java (registered trademark) application program 28 (type is BD), the path is set to two of "/library/std.jar:/library/dtv.bd.jar" as the example. However, paths different from the paths shown in Fig. 10 may of course be set in accordance with built-in libraries different from one application to another.

### Brief Description of Drawings

[Fig. 1] A block diagram showing the structure of an information processing apparatus according to an embodiment of the present invention.
[Fig. 2] A diagram showing the more detailed structure of hardware of the information processing apparatus.
[Fig. 3] A diagram showing the structure of software of the information processing apparatus shown in Fig. 1.
[Fig. 4] A diagram showing the data structure of an application information table AIT.
[Fig. 5] A diagram showing the data structure of an application management table AMT.
[Fig. 6] A diagram showing a flowchart of an operation at a time when a Java (registered trademark) application program is loaded by a JVM pre-execution processing unit.
[Fig. 7] A diagram showing a flowchart of an operation at a time when a Java (registered trademark) application program is loaded by the JVM pre-execution processing unit.
[Fig. 8] A diagram showing a data structure of a type data table.
[Fig. 9] A diagram showing a flowchart of a Java (registered trademark) application program execution process executed by a JVM execution processing unit.
[Fig. 10] A diagram showing the relationship between a type and a classpath.

### Description of Reference Numerals

- AIT: application information table
- AMT: application management table
- 1: information processing apparatus
- 2: OFDM demodulator
- 3: demultiplexer
- 4: video decoder
- 5: audio decoder
- 6: JVM pre-execution processing unit
- 10: disc read unit
- 11: IP stack
- 12: JVM execution processing unit
- 22: JVM
- 23: basic library
- 24: BD library
- 25: DTV library
- 26 to 29: Java (registered trademark) application program
- 30: type data table

## Claims

1. An information processing apparatus that obtains, from a plurality of distributors that distributes an application program, the application program and executes the application program, comprising:
a first storage unit that stores, in a directory structure, a plurality of library files capable of being called by the application program by a library name;
an obtaining means for obtaining the application program and obtaining table information including identification information for identifying the application program and management information for managing execution of the application program;
a generating means for identifying a distributor of the table information obtained, and generating second table information that indicates a relationship between the identification information of the application program obtained and a distributor of the application program; and
a setting means for determining, when an application program to be executed is selected, a distributor corresponding to the identification information of the selected application program on a basis of the second table information, and setting a path of the library file called in execution of the selected application program in accordance with the distributor.

2. The information processing apparatus according to claim 1, wherein
the generating means identifies the distributor of the application program on the basis of a table name that is included in the table information.

3. The information processing apparatus according to claim 2, further comprising
an executing means for executing the application program by using the library file of the path that is set by the setting means.

4. The information processing apparatus according to claim 3, wherein
the obtaining means obtains the application program and the table information through a transmission medium.

5. An information processing method for obtaining, from a plurality of distributors that distributes an application program, the application program and executing the application program, comprising:
storing, in a directory structure, a plurality of library files capable of being called by the application program by a library name;
obtaining the application program and obtaining table information including identification information for identifying the application program and management information for managing execution of the application program;
identifying a distributor of the table information obtained, and generating second table information that indicates a relationship between the identification information of the application program obtained and a distributor of the application program; and
determining, when an application program to be executed is selected, a distributor corresponding to the identification information of the selected application program on a basis of the second table information, and setting a path of the library file called in execution of the selected application program in accordance with the distributor.

6. A program that causes a computer to obtain, from a plurality of distributors that distributes an application program, the application program and execute the application program, the program causing the computer to execute
storing, in a directory structure, a plurality of library files capable of being called by the application program by a library name,
obtaining the application program and obtaining table information including identification information for identifying the application program and management information for managing execution of the application,
identifying a distributor of the table information obtained, and generating second table information that indicates a relationship between the identification information of the application program obtained and a distributor of the application program, and
determining, when an application program to be executed is selected, a distributor corresponding to the identification information of the selected application program on a basis of the second table information, and setting a path of the library file called in execution of the selected application program in accordance with the distributor.
